# EUROPÄISCHE PATENTSCHRIFT

(11) **EP 2 444 187 B1**
(45) Veröffentlichungstag und Bekanntmachung des Hinweises auf die Patenterteilung: **06.03.2013**
(21) Anmeldenummer: 10013795.9
(22) Anmeldetag: 20.10.2010
(51) Int. Cl.: B23C 5/08, B23D 45/08, B23D 61/08

(54) **Wirbeltrennvorrichtung**
Whirling cutting device
Dispositif de coupe par mouvement satellite

(43) Veröffentlichungstag der Anmeldung: 25.04.2012
(73) Patentinhaber: Reika GmbH & Co. KG, 58093 Hagen (DE)
(72) Erfinder: Braun, Hans-Jörg, 58093 Hagen (DE)
(74) Vertreter: Dörner, Kötter & Kollegen

(56) Entgegenhaltungen:
- EP-A2- 1 043 103
- DE-U1-202009 015 096
- FR-A- 999 747
- JP-A- 59 024 911
- US-A- 3 242 553
- US-A- 4 116 095

## Beschreibung

Die Erfindung betrifft eine Wirbeltrennvorrichtung für den Einsatz in fliegenden Sägen nach dem Oberbegriff des Patentanspruchs 1. Die Erfindung betrifft weiterhin ein ringförmiges Wirbelwerkzeug zum Einsatz in einer solchen Vorrichtung nach dem Patentanspruch 11. Eine derartige Wirbeltrennvorrichtung und ein deratiges Wirbelwerkzeug geht beispielsweise aus der US 4 116 095 hervor.

Beim Wirbelverfahren handelt es sich um ein spanabhebendes Verfahren, bei dem das Werkzeug das Werkstück spiralwirbelartig umkreist. Die Einschnitttiefe wird durch ein oder mehrere, mit hoher Schnittgeschwindigkeit umlaufende Messer, in einem Arbeitsgang hergestellt. Dabei wälzt sich die durch das Schneidwerkzeug gebildete Innenmantelfläche auf der zylindrischen Außenmantelfläche des zu bearbeitenden Werkstücks ab. Dieser Bewegungsvorgang wird von der sich ständig kreisenden Bewegung des Schneidwerkzeugs überlagert.

Das Wirbelverfahren, beispielsweise bekannt aus der EP 0 490 328 B1, hat den Vorteil, dass eine Vielzahl von Schneidwerkzeugen, insbesondere Scheidstählen, nebeneinander angeordnet werden können, die über einen größeren Segmentbereich gleichzeitig in Eingriff mit dem Werkstück stehen. Beim Wirbeltrennen wird dabei ein Wirbelsägewerkzeug mit innenliegender Verzahnung - nachfolgend unter dem Begriff "Sägeblatt" subsumiert - eingesetzt. Die Schneidzähne des Sägeblatts können tangential in das Werkstück eindringen. Auf Grund des Wirbelverfahrens braucht der wirksame Eindringradius des Sägeblatts nur die Wandstärke des Werkstücks zu umfassen. Handelt es sich hierbei um ein Vollmaterial, so muss das Sägeblatt nur bis zum Mittelpunkt des Vollmaterials eindringen, da die weitere Hälfte des Werkstücks durch die Umkreisung des Sägeblatts abgetrennt wird. Der Einsatz des Wirbelverfahrens zum Trennen von rohr- und stangenförmigen Werkstücken hat sich bewährt, insbesondere können hierbei die Bearbeitungszeiten deutlich reduziert werden.

Zum Ablängen von längsnahtgeschweißten Rohrsträngen, die theoretisch endlos sind, kommen sogenannte fliegende Sägen zum Einsatz, welche mit dem Vorschub des Rohrstrangs synchronisiert sind und den Trennvorgang dem Vorschub des Rohrstrangs folgend vornehmen. Eine derartige fliegende Säge ist beispielsweise ist aus der DE 31 12 519 A1 bekannt.

Bei Ausgestaltung einer fliegenden Säge als Wirbelsägevorrichtung mit einem Sägeblatt mit innenliegender Verzahnung stellt sich die Problematik, dass das geschlossene Ringwerkzeug bei einem unplanmäßigen Werkzeugwechsel nicht ohne weiteres entnommen werden kann, ohne das Rohr zuvor zu trennen.

Hier will die Erfindung Abhilfe schaffen. Der Erfindung liegt die Aufgabe zugrunde, eine Wirbeltrennvorrichtung für den Einsatz bei fliegenden Sägen zu schaffen, welche einen unplanmäßigen Werkzeugwechsel ohne vorheriges Trennen des Rohres ermöglicht. Gemäß der Erfindung wird die Aufgabe durch eine Wirbeltrennvorrichtung mit den Merkmalen des kennzeichnenden Teils des Patentanspruchs 1 gelöst.

Mit der Erfindung ist eine Wirbeltrennvorrichtung für den Einsatz bei fliegenden Sägen geschaffen, welche einen unplanmäßigen Werkzeugwechsel ohne vorheriges Trennen des Rohres ermöglicht. Durch die Ausgestaltung des Wirbelwerkzeugs aus mindestens zwei Ringsegmenten ist eine partielle Entnahme der Ringsegmente ermöglicht. Die geschlossene Anordnung der wenigstens zwei Ringsegmente in Form eines ringförmigen Werkzeugs mit innenliegender Verzahnung ist durch die an den Ringsegmenten vorgesehene Positioniereinrichtung ermöglicht, welche mit einer an der Werkzeugaufnahme angeordneten Positioniereinrichtung korrespondiert.

In Weiterbildung der Erfindung ist die an den Ringsegmenten angeordnete Positioniereinrichtung jeweils durch eine bogenförmige Nut gebildet und die Positioniereinrichtung der Werkzeugaufnahme weist einen mit der bogenförmigen Nut korrespondierenden bogenförmigen Steg auf. Hierdurch ist eine prozesssichere, einfache, lagebestimmte Positionierung der Ringsegmente ermöglicht. Gleiches gilt bei Anordnung des bogenförmigen Steges an den Ringsegmenten, wobei die Positioniereinrichtung der Werkzeugaufnahme eine mit den bogenförmigen Steg korrespondierende Nut aufweist.

In weiterer Ausgestaltung der Erfindung ist die bogenförmige Nut der Ringsegmente kreisbogenförmig ausgebildet, derart, dass durch die Nuten der Ringsegmente in montiertem Zustand eine kreisförmig umlaufende Nut gebildet ist, wobei der bogenförmige Steg der Werkzeugaufnahme in Form eines umlaufenden Kreisbogens ausgebildet ist. Hierdurch ist eine einfache Positionierung der Ringsegmente erzielt.

Bevorzugt weisen die Nuten sowie die Stege einen Querschnitt in Form eines symmetrischen Trapezes auf. Hierdurch ist die Einführung der bogenförmigen Stege in die korrespondierenden Nuten erleichtert.

In weiterer Ausgestaltung der Erfindung weisen die wenigstens zwei Ringsegmente jeweils wenigstens eine Spankammer zur Spanabfuhr auf. Hierdurch ist eine geordnete Abführung der Späne bewirkt, wodurch eine sauberer Schnitt erzielt wird.

Gemäß der Erfindung sind die wenigstens zwei Ringsegmente zusätzlich an ihrer der Werkzeugaufnahme abgewandten Seite mit einer Positioniereinrichtung versehen, wobei ein Handhabungsmodul zur zentrierten Montage der Ringsegmente an der Werkzeugaufnahme vorgesehen ist, welches eine Positioniereinrichtung aufweist, die mit der Positioniereinrichtung der Ringsegmente korrespondiert, wodurch eine zentrierte Anordnung der Ringsegmente zueinander gewährleistet ist. Hierdurch ist eine teilautomatische bzw. auch eine automatische Bestückung der Vorrichtung mit Ringsegmenten ermöglicht.

Vorteilhaft ist die zusätzliche an den Ringsegmenten angeordnete Positioniereinrichtung jeweils durch eine an ihrer der Werkzeugaufnahme abgewandten Seite der Ringsegmente eingebrachte bogenförmige Nut oder einen angeordneten bogenförmigen Steg gebildet. Dabei ist die bogenförmige Nut bzw. der bogenförmige Steg der Ringsegmente bevorzugt kreisbogenförmig ausgebildet, derart, dass durch die Nuten bzw. die Stege der Ringsegmente in montiertem Zustand eine kreisförmig umlaufende Nut bzw. ein kreisförmig umlaufender Steg gebildet ist. Dabei weist die zusätzliche bogenförmige Nut bzw. der zusätzlich angeordnete bogenförmige Steg bevorzugt einen Querschnitt in Form eines symmetrischen Trapezes auf.

Der vorliegenden Erfindung liegt weiterhin die Aufgabe zugrunde, ein ringförmiges Wirbelwerkzeug zum Einsatz in einer Vorrichtung der vorgenannten Art zu schaffen, welches einen unplanmäßigen Werkzeugwechsel ohne vorheriges Durchtrennen des Rohres ermöglicht. Gemäß der Erfindung wird diese Aufgabe durch die Merkmale des kennzeichnenden Teils des Patentanspruchs 11 gelöst.

In Weiterbildung der Erfindung weisen die Nuten sowie die Stege einen Querschnitt in Form eines symmetrischen Trapezes auf. Hierdurch ist die lagegerechte Positionierung der Ringsegmente des ringförmigen Wirbelwerkzeuges an der Werkzeugaufnahme erleichtert.

Gegenstand der vorliegenden Erfindung ist zudem eine fliegende oder stationäre Säge zum Ablängen von Stangen- oder Rohrmaterial, mit einer Wirbeltrennvorrichtung der vorgenannten Art.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

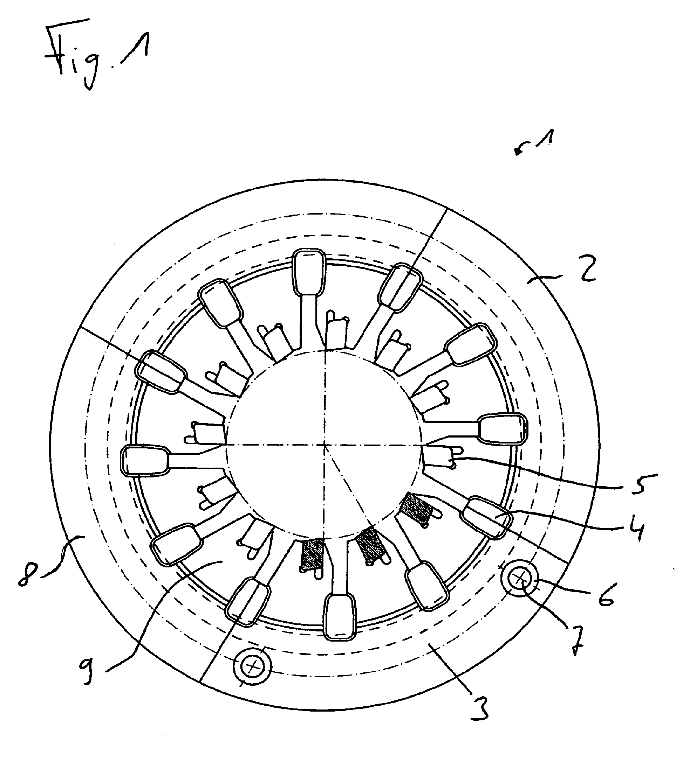

- Figur 1:: die schematische Darstellung eines ringförmigen Wirbelwerkzeugs und

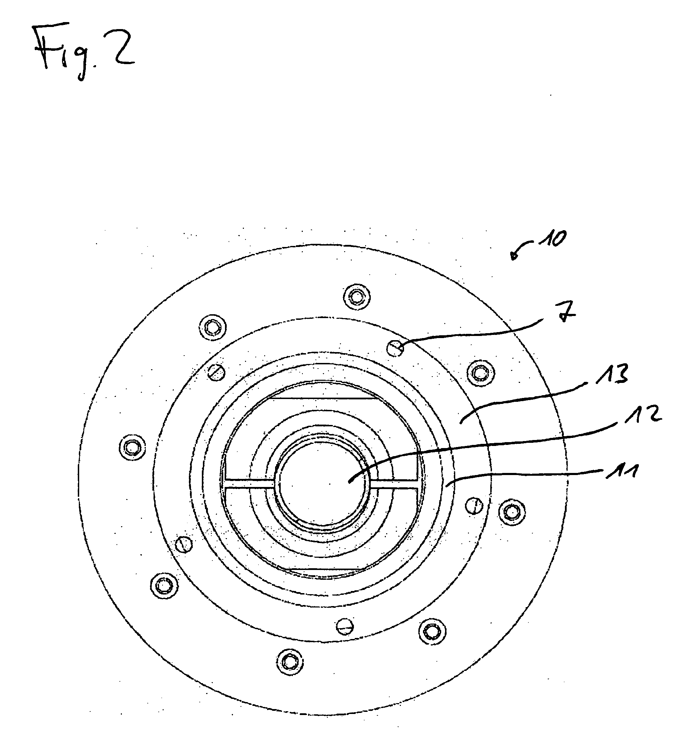

- Figur 2:: die schematische Darstellung einer Werkzeugaufnahme zur Aufnahme des in Figur 1 dargestellten Wirbelwerkzeugs.

Die als Ausführungsbeispiel gewählte Vorrichtung besteht im Wesentlichen aus einer Werkzeugaufnahme 10 sowie einem von dieser aufgenommenen ringförmigen Wirbelwerkzeug 1. Die Werkzeugaufnahme 10 ist im Wesentlichen trichterförmig ausgebildet. Diese Ausformung wirkt sich begünstigend auf die Spanabfuhr aus. Umlaufend ihrer kreisförmigen Öffnung 12 ist in der Werkzeugaufnahme 10 ein Anlageflansch 13 zur passgenauen Anlage eines Wirbelwerkzeugs 1 angeordnet. Zur definierten Lage des Wirbelwerkzeugs 1 ist der Anlageflansch 13 mit einem umlaufend kreisförmigen Steg 11 versehen. Beabstandet zu dem kreisförmig umlaufenden Steg 11 sind weiterhin Fixierstifte 7 angeordnet, die in Bohrungen 6 des Wirbelwerkzeugs 1 eingreifen und das Wirbelwerkzeug 1 axial fixieren. Die Werkzeugaufnahme 10 ist innerhalb einer fliegenden Säge mit einem Wirbelaggregat mit einem rotatorischen Antrieb verbunden.

Das Wirbelwerkzeug 1 ist im Ausführungsbeispiel in Art eines Sägeblatts mit Innenverzahnung ausgebildet. Es besteht im Wesentlichen aus einem Ringkörper 8, der innen durch einen Schneidenträgerring 9 begrenzt ist, welcher Schneiden 5 aufnimmt. Zwischen den Schneiden 5 ist jeweils eine radial nach außen gerichtete Spankammer 4 angeordnet. Das Wirbelwerkzeug 1 ist im Ausführungsbeispiel zusammengesetzt aus vier Ringsegmenten 2, welche jeweils mit einer kreisbogenförmigen Nut 3 versehen sind. Die Nuten 3 sind dabei derart ausgebildet, dass sie im zusammengesetzten Zustand des Wirbelwerkzeugs 1 eine umlaufende kreisförmige Nut bilden. Die Nuten 3 der Ringsegmente 2 weisen einen Querschnitt in Form eines symmetrischen Trapezes auf. Korrespondierend hierzu weist der kreisbogenförmige umlaufende Steg 11 der Werkzeugaufnahme 10 ebenfalls einen Querschnitt in Form eines symmetrischen Trapezes auf. Die Teilungskanten der Ringsegmente 2 sind im Ausführungsbeispiel derart ausgebildet, dass sie in montiertem Zustand nicht auf einer Linie mit einer Teilungskante eines anderen Ringsegmentes 2 liegen. Dabei sind die Teilungskanten jeweils mittig durch eine Spankammer 4 geführt.

Die Ringsegmente 2 sind im Ausführungsbeispiel mit Bohrungen 6 zur Aufnahme von Fixierstiften 7 der Werkzeugaufnahme 10 versehen.

## Patentansprüche

1. Wirbettrennvorrichtung für den Einsatz in fliegenden Sägen, mit einer Werkzeugaufnahme (10) und einem von dieser aufgenommen ringförmigen Wirbelwerkzeug (1), wobei das ringförmige Wirbelwerkzeug (1) aus wenigstens zwei Ringsegmenten (2) gebildet ist, welche an ihrer der Werkzeugaufnahme (10) zugewandten Seite mit einer Positioniereinrichtung versehen sind, die mit einer an der Werkzeugaufnahme (10) angeordneten Positioniereinrichtung korrespondiert, wodurch eine zentrierte Anordnung der Ringsegmente (2) zueinander sowie eine Zentrierung des Wirbelwerkzeugs (1) in der Werkzeugaufnahme (10) erzielt ist, **dadurch gekennzeichnet, dass** die wenigstens zwei Ringsegmente (2) zusätzlich an ihrer der Werkzeugaufnahme (10) abgewandten Seite mit einer weiteren Positioniereinrichtung versehen sind, wobei ein Handhabungsmodul zur zentrierten Montage der Ringsegmente (2) an der Werkzeugaufnahme (10) vorgesehen ist, welches eine Positioniereinrichtung aufweist, die mit der weiteren Positioniereinrichtung der Ringsegmente (2) korrespondiert, wodurch eine zentrierte Anordnung der Ringsegmente (2) zueinander gewährleistet ist.

2. Vorrichtung nach Anspruch 1, **dadurch gekennzeichnet, dass** die an den Ringsegmenten (2) angeordnete Positioniereinrichtung jeweils durch eine bogenförmige Nut (3) gebildet ist und die Positioniereinrichtung der Werkzeugaufnahme (10) einen mit der bogenförmigen Nut korrespondierenden bogenförmigen Steg (11) aufweist oder umgekehrt.

3. Vorrichtung nach Anspruch 2, **dadurch gekennzeichnet, dass** die bogenförmige Nut (3) der Ringsegmente (2) kreisbogenförmig ausgebildet ist, derart, dass durch die Nuten (3) der Ringsegmente (2) in montierten Zustand eine kreisförmig umlaufende Nut gebildet ist, wobei der bogenförmige Steg (11) der Werkzeugaufnahme (10) in Form eines umlaufenden Kreisbogens ausgebildet ist.

4. Vorrichtung nach Anspruch 2 oder 3, **dadurch gekennzeichnet, dass** die Nuten (3) sowie die Stege (11) einen Querschnitt in Form eines symmetrischen Trapezes aufweisen.

5. Vorrichtung nach einem der vorgenannten Ansprüche, **dadurch gekennzeichnet, dass** das Wirbelwerkzeug (1) eine Wirbelsäge ist.

6. Vorrichtung nach einem der vorgenannten Ansprüche, **dadurch gekennzeichnet, dass** die wenigstens zwei Ringsegmente (2) jeweils wenigstens eine Spankammer (4) zur Spanabfuhr aufweisen.

7. Vorrichtung nach Anspruch 1, **dadurch gekennzeichnet, dass** die zusätzliche an den Ringsegmenten (2) angeordnete Positioniereinrichtung jeweils durch eine an ihrer der Werkzeugaufnahme (10) abgewandten Seite der Ringsegmente (2) eingebrachte bogenförmige Nut oder einen angeordneten bogenförmigen Steg gebildet ist.

8. Vorrichtung nach Anspruch 7, **dadurch gekennzeichnet, dass** die der Werkzeugaufnahme (10) abgewandte bogenförmige Nut bzw. der bogenförmige Steg der Ringsegmente (2) kreisbogenförmig ausgebildet ist, derart, dass durch die Nuten bzw. die Stege der Ringsegmente (2) in montiertem Zustand eine kreisförmig umlaufende Nut bzw. ein kreisförmig umlaufender Steg gebildet ist

9. Vorrichtung nach Anspruch 7, **dadurch gekennzeichnet, dass** die zusätzliche bogenförmige Nut bzw. der zusätzlich angeordnete bogenförmige Steg einen Querschnitt in Form eines symmetrischen Trapezes aufweist.

10. Ringförmiges Wirbelwerkzeug zum Einsatz in einer Vorrichtung nach einemder vorgenannten Ansprüche, **dadurch gekennzeichnet, dass** dieses aus wenigstens zwei Ringsegmenten (2) gebildet ist, welche jeweils an beiden Seiten eine Positioniereinrichtung in Form einer bogenförmigen kreissegmentartigen Nut (3) oder eines bogenförmigen, kreissegmentartigen Steges aufweisen.

11. Ringförmiges Wirbelwerkzeug nach Anspruch 11, **dadurch gekennzeichnet, dass** die Nuten (3) sowie die Stege einen Querschnitt in Form eines symmetrischen Trapezes aufweisen

12. Fliegende oder stationäre Säge zum Ablängen von Stangen- oder Rohrmaterial, mit einer Wirbeltrennvorrichtung nach einem der Ansprüche 1 bis 10.

## Claims

1. Whirling cutting device for use in flying saws, with a tool-retaining fixture (10) and a ring-shaped whirling tool (1) retained by it, where the ring-shaped whirling tool (1) is formed of at least two ring segments (2) which are fitted with a positioning device on their side facing the tool-retaining fixture (10), which positioning device corresponds to a positioning device on the tool-retaining fixture (10), by means of which a centred arrangement of the ring segments (2) to one another and the centring of the whirling tool (1) in the tool-retaining fixture (10) is achieved,
**characterised in that** the two ring segments (2) at least are also fitted with another positioning device on their side facing away from the tool-retaining fixture (10), where a handling module is provided for centring the ring segments (2) on the tool-retaining fixture (10), which handling module has a positioning device which corresponds to the other positioning device of the ring segments (2), by means of which a centred arrangement of the ring segments (2) to one another is ensured.

2. Device according to claim 1 **characterised in that** the positioning device arranged on the ring segments (2) is formed in each case by an arc-shaped groove (3) and the positioning device of the tool-retaining fixture (10) has an arc-shaped ridge (11) corresponding to the arc-shaped groove (3) or vice versa.

3. Device according to claim 2 **characterised in that** the arc-shaped groove (3) of the ring segments (2) is formed as the arc of a circle in such a way that, in the assembled state, a circumferential circular groove is formed by the grooves (3) of the ring segments (2), where the arc-shaped ridge (11) of the tool-retaining fixture (10) is formed in the shape of a circumferential arc.

4. Device according to either of the claims 2 or 3, **characterised in that** the grooves (3) and the ridges (11) have a cross section in the shape of a symmetrical trapezium.

5. Device according to any of the above claims, **characterised in that** the whirling tool (1) is a whirling saw.

6. Device according to any of the above claims, **characterised in that** the two ring segments (2) at least each have at least one chip space (4) for chip removal.

7. Device according to claim 1 **characterised in that** the positioning device also arranged on the ring segments (2) is, in each case, formed by an arc-shaped groove or an arc-shaped ridge cut into or arranged on the side of the ring segments (2) facing away from the tool-retaining fixture (10).

8. Device according to claim 7 **characterised in that** the arc-shaped groove or the arc-shaped ridge of the ring segments (2) facing away from the tool-retaining fixture (10) is formed in the shape of a circular arc in such a way that a fully circumferential groove or fully circumferential ridge is formed by the grooves or ridges of the ring segments (2) in the assembled state.

9. Device according to claim 7 **characterised in that** the additional arc-shaped groove or the additionally arranged arc-shaped ridge have a cross section in form of a symmetrical trapezium.

10. Ring-shaped whirling tool for use in a device according to one of the above claims, **characterised in that** this is formed of at least two ring segments (2) each of which has on either side a positioning device in form of an arc-shaped groove (3) like the segment of a circle, or of an arc-shaped ridge also like the segment of a circle.

11. Ring-shaped whirling tool according to claim 11 **characterised in that** the grooves (3) and the ridges have a cross section in form of a symmetrical trapezium.

12. Flying or stationary saw for cutting rod or tubular material with a whirling device according to any of the claims 1 to 10.

## Revendications

1. Dispositif de coupe par mouvement satellite à mettre en oeuvre dans des scies volantes, équipé d'un réceptacle d'outils (10) et d'un outil (1) annulaire à mouvement satellite logé dans ledit réceptacle, sachant que l'outil annulaire (1) à mouvement satellite est formé à partir d'au moins deux segments annulaires (2) qui sont dotés, sur leur côté regardant le réceptacle (10) d'outil, d'un dispositif de positionnement qui épouse un dispositif de positionnement agencé contre le réceptacle (10) d'outil, ce qui permet d'agencer les segments annulaires (2) de façon réciproquement centrée, ainsi que de centrer l'outil (1) à mouvement satellite dans le réceptacle d'outil (10),
**caractérisé en ce qu'**au moins deux segments annulaires (2) sont en plus dotés, sur leur côté ne regardant pas le réceptacle (10) d'outil, d'un autre dispositif d'équipement, sachant qu'est prévu un module de maniement pour monter centrés les segments annulaires (2) contre le réceptacle d'outil (10), lequel module présente un dispositif de positionnement épousant un autre dispositif de positionnement des segments annulaires (2), ce qui garantit que les segments annulaires (2) soient réciproquement centrés.

2. Dispositif selon la revendication 1, **caractérisé en ce que** le dispositif de positionnement agencé contre les segments annulaires (2) est formé chaque fois par une rainure (3) incurvée et **en ce que** le dispositif de positionnement du réceptacle (10) à outil présente une nervure incurvée (11) épousant la rainure incurvée.

3. Dispositif selon la revendication 2, **caractérisé en ce que** la rainure incurvée (3) que comportent les segments annulaires (2) est configurée en arc de cercle de sorte que les rainures (3) des segments annulaires (2) forment à l'état monté une rainure circonférentielle, sachant que la nervure incurvée (11) du réceptacle (10) à outil a la forme d'un arc circonférentiel.

4. Dispositif selon la revendication 2 ou 3, **caractérisé en ce que** les rainures (3) ainsi que les nervures (11) présentent une section en forme de trapèze symétrique.

5. Dispositif selon l'une des revendications précédentes, **caractérisé en ce que** l'outil à mouvement satellite (1) est une scie à mouvement satellite.

6. Dispositif selon l'une des revendications précédentes, **caractérisé en ce qu'**au moins deux segments annulaires (2) présentent chacun au moins un compartiment (4) permettant d'évacuer les copeaux.

7. Dispositif selon la revendication 1, **caractérisé en ce que** le dispositif de positionnement supplémentaire agencé contre les segments annulaires (2) est formé respectivement par une rainure incurvée ménagée sur le côté des segments annulaires (2) qui ne regarde pas le réceptacle (10) à outil, ou par une nervure incurvée agencée.

8. Dispositif selon la revendication 7, **caractérisé en ce que** la rainure incurvée ne regardant pas le réceptacle (10) à outil et/ou la nervure incurvée des segments annulaires (2) est agencée en arc de cercle de sorte que les rainures et/ou les nervures des segments annulaires (2) forment à l'état monté une rainure circulaire et/ou une nervure circulaire.

9. Dispositif selon la revendication 7, **caractérisé en ce que** la rainure incurvée supplémentaire et/ou la nervure incurvée agencée en plus présente une section en forme de trapèze symétrique.

10. Outil à mouvement satellite annulaire, à mettre en oeuvre dans un dispositif selon l'une des revendications précédentes, **caractérisé en ce que** cet outil est formé d'au moins deux segments annulaires (2), lesquels présentent sur les deux côtés un dispositif de positionnement sous forme de rainure (3) incurvée circonférentielle ou de nervure incurvée en arc de cercle.

11. Outil annulaire à mouvement satellite selon la revendication 11, **caractérisé en ce que** les rainures (3) ainsi que les nervures présentent une section en forme de trapèze symétrique.

12. Scie volante ou stationnaire pour tronçonner des matériaux en barre ou tubulaires, avec un dispositif de coupe à mouvement satellite selon l'une des revendications 1 à 10.
